(19) Europäisches Patentamt
European Patent Office
Office européen des brevets

(11) EP 2 714 788 B1

(12) # FASCICULE DE BREVET EUROPEEN

(45) Date de publication et mention de la délivrance du brevet:
**15.07.2020 Bulletin 2020/29**

(21) Numéro de dépôt: **12729050.0**

(22) Date de dépôt: **31.05.2012**

(51) Int Cl.:
***C08K 3/26*** *(2006.01)* ***C08K 5/09*** *(2006.01)*
***C08L 9/06*** *(2006.01)* ***B60C 1/00*** *(2006.01)*
***C08J 9/08*** *(2006.01)*

(86) Numéro de dépôt international:
**PCT/EP2012/060216**

(87) Numéro de publication internationale:
**WO 2012/164001 (06.12.2012 Gazette 2012/49)**

(54) **PNEUMATIQUE POUR VEHICULE DONT LA BANDE DE ROULEMENT COMPORTE UNE COMPOSITION DE CAOUTCHOUC THERMO-EXPANSIBLE**

THERMISCH EXPANDIERBARE KAUTSCHUKMISCHUNG FÜR LAUFFLÄCHEN VON FAHRZEUGREIFEN

TREAD FOR VEHICLE TYRE COMPRISING A THERMO-EXPANDABLE RUBBER COMPOSITION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.06.2011 FR 1154799**

(43) Date de publication de la demande:
**09.04.2014 Bulletin 2014/15**

(73) Titulaire: **Compagnie Générale des Etablissements Michelin**
**63000 Clermont-Ferrand (FR)**

(72) Inventeurs:
- **SHIRAISHI, Yu**
  **Tokyo 102-8176 (JP)**
- **CUSCITO, Olivia**
  **F-63040 Clermont-Ferrand Cedex 9 (FR)**

(74) Mandataire: **Regimbeau**
**20, rue de Chazelles**
**75847 Paris Cedex 17 (FR)**

(56) Documents cités:
**EP-A1- 2 039 531**
**FR-A- 1 475 141**
**US-A1- 2003 119 927**

EP 2 714 788 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

### 1. DOMAINE DE L'INVENTION

L'invention est relative aux pneus pour véhicules automobiles ainsi qu'aux compositions de caoutchouc utilisables pour la fabrication de tels pneus.

Elle est plus particulièrement relative aux pneus dont la bande de roulement comporte une composition de caoutchouc mousse, à l'état vulcanisé, destinée à réduire le bruit émis par ces pneus lors du roulage des véhicules.

### 2. ETAT DE LA TECHNIQUE

Il est connu (voir par exemple demande de brevet WO 2010/069510) que le bruit émis par un pneu en roulage a pour origine entre autres les vibrations de sa structure consécutives au contact du pneu avec les irrégularités de la chaussée, provoquant également une génération d'ondes acoustiques diverses. Le tout se manifeste finalement sous forme de bruit, tant a l'intérieur qu'à l'extérieur du véhicule. L'amplitude des ces différentes manifestations est tributaire des modes de vibrations propres du pneu mais également de la nature du revêtement sur lequel le véhicule se déplace. La gamme de fréquences correspondant au bruit généré par les pneus s'étend typiquement de 20 à 4 000 Hz environ.

En ce qui concerne le bruit perçu à l'intérieur du véhicule, deux modes de propagation du son coexistent :

- les vibrations sont transmises par le centre roue, le système de suspension, la transmission pour finalement générer du bruit dans l'habitacle ; on parle alors de transmission par voie solidienne, généralement dominante pour les basses fréquences du spectre (jusqu'à environ 400 Hz) ;
- les ondes acoustiques émises par le pneu sont directement propagées par voie aérienne à l'intérieur du véhicule, ce dernier faisant office de filtre ; on parle alors de transmission par voie aérienne, qui domine généralement dans les hautes fréquences (environ 600 Hz et au delà).

Le bruit dit *"road noise"* fait plutôt référence au niveau global perçu dans le véhicule et dans une gamme de fréquence allant jusqu'à 2000 Hz. Le bruit dit "de cavité" fait référence à la gêne due à la résonance de la cavité de gonflage de l'enveloppe du pneu.

En ce qui concerne le bruit émis à l'extérieur du véhicule, sont pertinentes les diverses interactions entre le pneu et le revêtement routier, le pneu et l'air, qui vont occasionner une gêne auprès des riverains du véhicule lorsque ce dernier roule sur une chaussée. On distingue également dans ce cas plusieurs sources de bruit telles que le bruit dit "d'indentation" du à l'impact des rugosités de la route dans l'aire de contact, le bruit dit "de friction" essentiellement généré en sortie de l'aire de contact, le bruit "dit de sculpture" du à l'arrangement des éléments de sculpture et à la résonance dans les différents sillons. La gamme de fréquences concernées correspond ici typiquement à une plage allant de 300 à 3 000 Hz environ.

Le brevet EP-A-2 039 531 divulgue des compositions de caoutchouc utilisées sous forme d'une mousse et en tant qu'une couche située entre la bande de roulement supérieure (tread cap) et bande de roulement inférieure (tread base), comprenant un mélange d'un caoutchouc SBR et d'un polybutadiene, une charge renforçante, un plastifiant et un agent d'expansion tel que des composés capables de libérer du dioxyde de carbone.

Le brevet FR-A-1 475 141 décrit un procédé de préparation d'une composition sous forme de mousse à base de caoutchouc utilisée pour la préparation de tapis et comprenant un caoutchouc styrène-butadiène, une charge renforçante, un plastifiant, du carbonate de sodium en tant qu' agent d'expansion et 5 à 12 pce d'acide stéarique.

Le brevet US-A-2003/0119927 décrit une composition de caoutchouc sous forme de mousse destinée à la préparation de bande de roulement comprenant un élastomère diénique, une charge renforçante et un agent d'expansion tel que l'hydrogénocarbonate de sodium.

### 3. BREVE DESCRIPTION DE L'INVENTION

Or, les Demanderesses ont découvert lors de leurs recherches une composition de caoutchouc spécifique qui, incorporée à la bande de roulement des pneus, possède des propriétés de barrière au son améliorées dans une plage de fréquence située entre 300 et 2000 Hz, et qui est donc susceptible de contribuer à réduire les bruits émis tant à l'intérieur qu'à l'extérieur des véhicules lors du roulage de leurs pneus.

En conséquence, la présente invention concerne un pneu dont la bande de roulement comporte, à l'état non vulcanisé, une composition de caoutchouc thermo-expansible comportant au moins :

- 50 à 100 pce d'un copolymère à base de styrène et de butadiène ;
- optionnellement, 0 à 50 pce d'un autre élastomère diénique ;

- plus de 50 pce d'une charge renforçante ;
- entre 5 et 25 pce d'un carbonate ou hydrogénocarbonate de sodium ou potassium ;
- entre 2 et 15 pce d'un acide carboxylique dont la température de fusion est comprise entre 60°C et 220°C ;
- la teneur totale en (hydrogéno)carbonate et acide carboxylique étant supérieure à 10 pce.

L'invention concerne également un pneu à l'état vulcanisé obtenu après cuisson (vulcanisation) du pneu cru conforme à l'invention tel que décrit ci-dessus.

Les pneus de l'invention sont particulièrement destinés à équiper des véhicules à moteur de type tourisme, incluant les véhicules 4x4 (à quatre roues motrices) et véhicules SUV ("*Sport Utility Vehicles*"), des véhicules deux roues (notamment motos) comme des véhicules industriels choisis en particulier parmi camionnettes et "poids-lourd" (i.e., métro, bus, engins de transport routier tels que camions, tracteurs).

L'invention ainsi que ses avantages seront aisément compris à la lumière de la description et des exemples de réalisation qui suivent.

## 4. DESCRIPTION DETAILLEE DE L'INVENTION

Dans la présente description, sauf indication expresse différente, tous les pourcentages (%) indiqués sont des pourcentages en masse.

Par élastomère (ou indistinctement caoutchouc) "diénique", on entend un élastomère issu au moins en partie (c'est-à-dire un homopolymère ou un copolymère) de monomère(s) diène(s) (i.e., porteur(s) de deux doubles liaisons carbone-carbone, conjuguées ou non). Par "élastomère isoprénique", on entend un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères.

L'abréviation "pce" signifie parties en poids pour cent parties d'élastomère (du total des élastomères si plusieurs élastomères sont présents).

D'autre part, tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

Le pneu de l'invention a donc pour caractéristique essentielle que sa bande de roulement à l'état non vulcanisé, tout au moins pour sa portion (partie radialement la plus externe) destinée à entrer directement en contact avec la surface de la route, comporte une composition de caoutchouc thermo-expansible comportant au moins :

- 50 à 100 pce d'un (au moins un, c'est-à-dire un ou plusieurs) copolymère à base de styrène et de butadiène ;
- optionnellement, 0 à 50 pce d'un (au moins un, c'est-à-dire un ou plusieurs) autre élastomère diénique ;
- plus de 50 pce d'une (au moins une, c'est-à-dire un ou plusieurs) charge renforçante ;
- entre 5 et 25 pce d'un (au moins un, c'est-à-dire un ou plusieurs) carbonate ou hydrogénocarbonate de sodium ou potassium ;
- entre 2 et 15 pce d'un (au moins un, c'est-à-dire un ou plusieurs) acide carboxylique dont la température de fusion est comprise entre 60°C et 220°C ;
- la teneur totale en (hydrogéno)carbonate et acide carboxylique étant supérieure à 10 pce.

Les différents composants ci-dessus sont décrits en détail ci-après.

### 4.1. Copolymère à base de styrène et de butadiène

La composition de caoutchouc thermo-expansible a pour première caractéristique essentielle de comporter 50 à 100 pce d'un copolymère à base de styrène et de butadiène, c'est-à-dire d'un copolymère d'au moins un monomère styrène et d'au moins un monomère butadiène ; en d'autres termes, ledit copolymère à base de styrène et de butadiène comporte par définition au moins des unités issues de styrène et des unités issues de butadiène.

Préférentiellement, le taux dudit copolymère, dans la composition de caoutchouc thermo-expansible, est compris dans un domaine de 50 à 90 pce, plus préférentiellement dans un domaine de 60 à 85 pce.

A titre de monomères butadiène conviennent notamment le butadiène-1,3, le 2-méthyl-1,3-butadiène, les 2,3-di(alkyle en $C_1$-$C_5$)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène. A titre de monomères styrène conviennent notamment le styrène, les méthylstyrènes, le para-tertiobutylstyrène, les méthoxystyrènes, les chlorostyrènes.

Ledit copolymère à base de styrène et de butadiène peut avoir toute microstructure qui est fonction des conditions de polymérisation utilisées, notamment de la présence ou non d'un agent modifiant et/ou randomisant et des

quantités d'agent modifiant et/ou randomisant employées. Il peut être par exemple à blocs, statistique, séquencé, microséquencé, et être préparé en dispersion ou en solution ; il peut être couplé et/ou étoilé ou encore fonctionnalisé avec un agent de couplage et/ou d'étoilage ou de fonctionnalisation.

De préférence, le copolymère à base de styrène et de butadiène est choisi dans le groupe constitué par les copolymères styrène-butadiène (en abrégé SBR), les copolymères styrène-butadiène-isoprène (en abrégé SBIR) et les mélanges de tels copolymères.

Parmi les copolymères SBIR, on peut citer notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%.

Plus préférentiellement, on utilise un copolymère SBR. Parmi les copolymères SBR, on peut citer notamment ceux ayant une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%.

La Tg du copolymère à base de styrène et de butadiène est de préférence supérieure à -40°C, plus préférentiellement supérieure à -35°C, en particulier comprise entre -30°C et +30°C (plus particulièrement comprise dans un domaine de -25°C à +25°C).

La Tg des élastomères ici décrits est mesurée de manière conventionnelle, bien connue de l'homme du métier, sur un élastomère à l'état sec (i.e., sans huile d'extension) et par DSC (par exemple selon ASTM D3418-1999).

L'homme du métier sait comment modifier la microstructure d'un copolymère à base de styrène et de butadiène, en particulier d'un SBR, pour augmenter et ajuster sa Tg, notamment en jouant sur les teneurs en styrène, en liaisons -1,2 ou encore en liaisons trans-1,4 de la partie butadiénique. On utilise plus préférentiellement un SBR (solution ou émulsion) ayant une teneur en styrène (% molaire) qui est supérieure à 35%, plus préférentiellement comprise entre 35% et 60%, en particulier dans un domaine de 38% à 50%. Des SBR à haute Tg sont bien connus de l'homme du métier, ils ont été essentiellement utilisés dans des bandes de roulement de pneus pour améliorer certaines de leurs propriétés d'usage.

Au copolymère à base de styrène et de butadiène ci-dessus, peut être associé au moins un autre (dit aussi second) élastomère diénique, différent dudit copolymère (c'est-à-dire ne comportant pas des unités issues de styrène et de butadiène), ledit second élastomère diénique étant présent à un taux pondéral qui est en conséquence au plus égal à 50 pce.

Ce second élastomère diénique éventuel est préférentiellement choisi dans le groupe constitué par les caoutchoucs naturels (NR), les polyisoprènes de synthèse (IR), les polybutadiènes (BR), les copolymères d'isoprène et les mélanges de ces élastomères. De tels copolymères sont plus préférentiellement choisis dans le groupe constitué par les copolymères d'isoprène-butadiène (BIR) et les copolymères d'isoprène-styrène (SIR).

Parmi ces derniers, conviennent notamment les homopolymères polybutadiène (BR) et en particulier ceux ayant une teneur (% molaire) en unités -1,2 comprise entre 4% et 80% ou ceux ayant une teneur (% molaire) en cis-1,4 supérieure à 80% ; les homopolymères polyisoprène (IR) ; les copolymères de butadiène-isoprène (BIR) et notamment ceux ayant une teneur en isoprène comprise entre 5% et 90% en poids et une Tg de - 40°C à - 80°C ; les copolymères isoprène-styrène (SIR) et notamment ceux ayant une teneur en styrène comprise entre 5% et 50% en poids et une Tg comprise entre - 25°C et - 50°C.

Selon un mode de réalisation préférentiel, le second élastomère diénique est un élastomère isoprénique, plus préférentiellement du caoutchouc naturel ou un polyisoprène de synthèse du type cis-1,4 ; parmi ces polyisoprènes de synthèse, sont utilisés de préférence des polyisoprènes ayant un taux (% molaire) de liaisons cis-1,4 supérieur à 90%, plus préférentiellement encore supérieur à 98%.

Selon un autre mode de réalisation préférentiel, le second élastomère diénique est un polybutadiène, de préférence un polybutadiène ayant un taux de liaisons cis-1,4 supérieur à 90%.

Selon un autre mode de réalisation préférentiel, le second élastomère diénique est un mélange de polybutadiène avec un élastomère isoprénique (caoutchouc naturel ou polyisoprène de synthèse).

Plus préférentiellement, le taux de second élastomère diénique, en particulier de polybutadiène et/ou d'élastomère isoprénique (notamment caoutchouc naturel), est compris dans un domaine de 10 à 50 pce, plus préférentiellement encore dans un domaine de 15 à 40 pce.

Aux élastomères diéniques précédemment décrits pourraient être également associés, en quantité minoritaire, des élastomères synthétiques autres que diéniques, voire des polymères autres que des élastomères, par exemple des polymères thermoplastiques.

4.2. Charge

Toute charge connue pour ses capacités à renforcer une composition de caoutchouc est utilisable, par exemple une charge organique telle que du noir de carbone, ou encore une charge inorganique telle que de la silice à laquelle est associé de manière connue un agent de couplage.

Une telle charge consiste préférentiellement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm.

De manière préférentielle, le taux de charge renforçante totale (en particulier de la silice ou du noir de carbone ou un mélange de silice et de noir de carbone) est compris entre 50 et 150 pce. Une teneur supérieure à 50 pce est favorable à une bonne tenue mécanique ; au-delà de 150 pce, il existe un risque de rigidité excessive de la composition de caoutchouc. Pour ces raisons, le taux de charge renforçante totale est plus préférentiellement compris dans un domaine de 70 à 120 pce.

Comme noirs de carbone conviennent par exemple tous les noirs de carbone qui sont conventionnellement utilisés dans les pneus (noirs dits de grade pneu) tels que les noirs des séries 100, 200, 300 (grades ASTM), comme par exemple les noirs N115, N134, N234, N326, N330, N339, N347, N375. Les noirs de carbone pourraient être par exemple déjà incorporés à l'élastomère diénique, notamment isoprénique, sous la forme d'un masterbatch (voir par exemple demandes WO 97/36724 ou WO 99/16600).

Comme exemples de charges organiques autres que des noirs de carbone, on peut citer les charges organiques de polyvinyle fonctionnalisé telles que décrites dans les demandes WO-A-2006/069792, WO-A-2006/069793, WO-A-2008/003434 et WO-A-2008/003435.

Par "charge inorganique renforçante", doit être entendu ici toute charge inorganique ou minérale, quelles que soient sa couleur et son origine (naturelle ou de synthèse), encore appelée charge "blanche", charge "claire" ou même charge "non-noir" par opposition au noir de carbone, capable de renforcer à elle seule, sans autre moyen qu'un agent de couplage intermédiaire, une composition de caoutchouc destinée à la fabrication de pneus, en d'autres termes apte à remplacer, dans sa fonction de renforcement, un noir de carbone conventionnel de grade pneu ; une telle charge se caractérise généralement, de manière connue, par la présence de groupes hydroxyle (-OH) à sa surface.

Comme charges inorganiques renforçantes conviennent notamment des charges minérales du type siliceuse, en particulier de la silice ($SiO_2$). La silice utilisée peut être toute silice renforçante connue de l'homme du métier, notamment toute silice précipitée ou pyrogénée présentant une surface BET ainsi qu'une surface spécifique CTAB toutes deux inférieures à 450 $m^2/g$, de préférence de 30 à 400 $m^2/g$, notamment entre 60 et 300 $m^2/g$. A titres de silices précipitées hautement dispersibles (dites "HDS"), on citera par exemple les silices "Ultrasil" 7000 et "Ultrasil" 7005 de la société Degussa, les silices "Zeosil" 1165MP, 1135MP et 1115MP de la société Rhodia, la silice "Hi-Sil" EZ150G de la société PPG, les silices "Zeopol" 8715, 8745 et 8755 de la Société Huber.

Selon un autre mode de réalisation particulièrement préférentiel, on utilise comme charge majoritaire une charge inorganique renforçante, en particulier de la silice, à un taux compris dans un domaine de 70 à 120 pce, charge inorganique renforçante à laquelle peut être ajoutée avantageusement du noir de carbone à un taux minoritaire au plus égal à 15 pce, en particulier compris dans un domaine de 1 à 10 pce.

Pour coupler la charge inorganique renforçante à l'élastomère diénique, on utilise de manière bien connue un agent de couplage (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés répondant à la formule générale (I) suivante:

$$\text{(I)} \qquad Z - A - S_x - A - Z ,$$

dans laquelle:

- x est un entier de 2 à 8 (de préférence de 2 à 5) ;
- les symboles A, identiques ou différents, représentent un radical hydrocarboné divalent (de préférence un groupement alkylène en $C_1$-$C_{18}$ ou un groupement arylène en $C_6$-$C_{12}$, plus particulièrement un alkylène en $C_1$-$C_{10}$, notamment en $C_1$-$C_4$, en particulier le propylène) ;
- les symboles Z, identiques ou différents, répondent à l'une des trois formules ci-après:

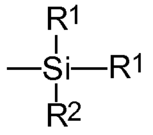 ; 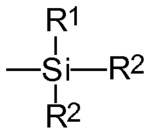 ; 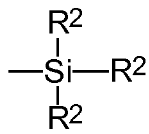 ,

dans lesquelles:

- les radicaux $R^1$, substitués ou non substitués, identiques ou différents entre eux, représentent un groupe alkyle en $C_1$-$C_{18}$, cycloalkyle en $C_5$-$C_{18}$ ou aryle en $C_6$-$C_{18}$ (de préférence des groupes alkyle en $C_1$-$C_6$, cyclohexyle ou phényle, notamment des groupes alkyle en $C_1$-$C_4$, plus particulièrement le méthyle et/ou l'éthyle).
- les radicaux $R^2$, substitués ou non substitués, identiques ou différents entre eux, représentent un groupe alkoxyle en $C_1$-$C_{18}$ ou cycloalkoxyle en $C_5$-$C_{18}$ (de préférence un groupe choisi parmi alkoxyles en $C_1$-$C_8$ et cycloalkoxyles en $C_5$-$C_8$, plus préférentiellement encore un groupe choisi parmi alkoxyles en $C_1$-$C_4$, en particulier méthoxyle et éthoxyle).

Dans le cas d'un mélange d'alkoxysilanes polysulfurés répondant à la formule (I) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en œuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl($C_1$-$C_4$)-alkyl($C_1$-$C_4$)silyl-alkyl($C_1$-$C_4$)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule $[(C_2H_5O)_3Si(CH_2)_3S_2]_2$ ou le disulfure de bis-(triéthoxysilylpropyle), en abrégé TESPD, de formule $[(C_2H_5O)_3Si(CH_2)_3S]_2$. On citera également à titre d'exemples préférentiels les polysulfures (notamment disulfures, trisulfures ou tétrasulfures) de bis-(monoalkoxyl($C_1$-$C_4$)-dialkyl($C_1$-$C_4$)silylpropyl), plus particulièrement le tétrasulfure de bis-monoéthoxydiméthylsilylpropyl tel que décrit dans la demande de brevet WO 02/083782 précitée (ou US 7 217 751).

A titre d'exemple d'agents de couplage autres qu'un alkoxysilane polysulfuré, on citera notamment des POS (polyorganosiloxanes) bifonctionnels ou encore des polysulfures d'hydroxysilane ($R^2$ = OH dans la formule I ci-dessus) tels que décrits par exemple dans les demandes de brevet WO 02/30939 (ou US 6 774 255), WO 02/31041 (ou US 2004/051210), et WO 2007/061550, ou encore des silanes ou POS porteurs de groupements fonctionnels azo-dicarbonyle, tels que décrits par exemple dans les demandes de brevet WO 2006/125532, WO 2006/125533, WO 2006/125534.

A titre d'exemples d'autres silanes sulfurés, on citera par exemple les silanes porteurs d'au moins une fonction thiol (-SH) (dits mercaptosilanes) et/ou d'au moins une fonction thiol bloqué, tels que décrits par exemple dans les brevets ou demandes de brevet US 6 849 754, WO 99/09036, WO 2006/023815, WO 2007/098080.

Bien entendu pourraient être également utilisés des mélanges des agents de couplage précédemment décrits, comme décrit notamment dans la demande WO 2006/125534 précitée.

Lorsqu'elles sont renforcées par une charge inorganique telle que silice, les compositions en caoutchouc comportent préférentiellement entre 2 et 15 pce, plus préférentiellement entre 3 et 12 pce d'agent de couplage.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

### 4.3. Agent d'expansion et activateur associé

L'invention a pour caractéristique essentielle d'utiliser en combinaison, à des taux particulièrement élevés, un carbonate ou un hydrogénocarbonate de sodium ou de potassium à titre d'agent d'expansion, auquel est associé, à titre d'activateur d'expansion, un acide carboxylique dont la dont la température de fusion est comprise entre 60°C et 220°C.

De manière bien connue, un agent d'expansion (« *blowing agent* » en anglais) est un composé décomposable thermiquement, destiné à libérer lors d'une activation thermique, par exemple lors de la vulcanisation du pneumatique, une quantité de gaz importante et ainsi conduire à la formation de bulles. La libération de gaz dans la composition de caoutchouc provient donc de cette décomposition thermique de l'agent d'expansion.

L'agent d'expansion utilisé conformément à la présente invention est un carbonate ou un hydrogénocarbonate

(parfois appelé aussi bicarbonate) de sodium ou de potassium. En d'autres termes, il est choisi dans le groupe constitué par le carbonate de sodium, l'hydrogénocarbonate de sodium, le carbonate de potassium, l'hydrogénocarbonate de potassium et les mélanges de ces composés (y compris, bien entendu, leurs formes hydratées).

Un tel agent d'expansion a l'avantage de ne dégager que du dioxyde de carbone et de l'eau lors de sa décomposition ; il est donc particulièrement favorable à l'environnement. On utilise particulièrement l'hydrogénocarbonate de sodium ($NaHCO_3$).

Le taux de cet agent d'expansion est compris entre 5 et 25, de préférence entre 8 et 20 pce.

Une autre caractéristique essentielle de l'invention est d'ajouter à l'agent d'expansion précédemment décrit un acide carboxylique dont la température de fusion est comprise entre 60°C et 220°C.

Le taux de cet acide carboxylique est compris entre 2 et 20 pce, de préférence 2 et 15 pce. En se dispersant de manière homogène dans la composition, lors de sa fusion dans le domaine de température spécifique indiqué ci-dessus, cet acide carboxylique a pour fonction d'activer chimiquement (i.e., par réaction chimique) l'agent d'expansion qui, lors de sa décomposition thermique, va ainsi libérer beaucoup plus de bulles de gaz ($CO_2$ et $H_2O$) que s'il était utilisé seul.

Tout acide carboxylique présentant une température de fusion comprise entre 60°C et 220°C (donc solide à 23°C), de préférence entre 100°C et 200°C, en particulier entre 120°C et 180°C, est susceptible de convenir. La température de fusion est une constante physique de base bien connue (disponible par exemple dans *"Handbook of Chemistry and Physics*") des composés thermofusibles, organiques ou inorganiques ; elle pourra être contrôlée par toute méthode connue, par exemple par la méthode de Thiele, la méthode du banc de Köfler ou encore par analyse DSC.

Les acides carboxyliques peuvent être des monoacides, diacides ou triacides, ils peuvent être aliphatiques ou aromatiques ; ils peuvent également comporter des groupements fonctionnels supplémentaires (autres que COOH) tels que des groupes hydroxyle (OH), des groupes cétone (C=O) ou encore des groupes porteurs d'insaturation éthylénique.

Selon un mode de réalisation préférentiel, le pKa (Ka constante d'acidité) de l'acide carboxylique est supérieur à 1, plus préférentiellement compris entre 2,5 et 12, en particulier compris entre 3 et 10.

Selon un autre mode de réalisation préférentiel, combiné ou non au précédent, l'acide carboxylique comporte, le long de sa chaîne hydrocarbonée, de 2 à 22 atomes de carbone, de préférence de 4 à 20 atomes de carbone.

Les monoacides aliphatiques comportent de préférence, le long de leur chaîne hydrocarbonée, au moins 16 atomes de carbone ; on peut citer à titre d'exemples l'acide palmitique (C16), l'acide stéarique (C18), l'acide nonadécanoique (C19), l'acide béhénique (C20) et leurs différents mélanges. Les diacides aliphatiques comportent de préférence, le long de leur chaîne hydrocarbonée, de 2 à 10 atomes de carbone ; on peut citer à titre d'exemples l'acide oxalique (C2), l'acide malonique (C3), l'acide succinique (C4), l'acide glutarique (C5), l'acide adipique (C6), l'acide pimellique (C7), l'acide subérique (C8), l'acide azélaique (C9), l'acide sébacique (C10) et leurs différents mélanges. A titre de monoacide aromatique, on peut citer par exemple l'acide benzoïque. Les acides comportant des groupes fonctionnels peuvent être des monoacides, diacides ou triacides, du type aliphatiques comme aromatiques ; on peut citer à titre d'exemples l'acide tartrique, l'acide malique, l'acide maléique, l'acide glycolique, l'acide $\alpha$-cétoglutarique, l'acide salycilique, l'acide phtalique ou encore l'acide citrique.

De manière préférentielle, l'acide carboxylique est choisi dans le groupe constitué par l'acide palmitique, l'acide stéarique, l'acide nonadécanoique, l'acide béhénique, l'acide oxalique, l'acide malonique, l'acide succinique, l'acide glutarique, l'acide adipique, l'acide pimellique, l'acide subérique, l'acide azélaique, l'acide sébacique, l'acide benzoïque, l'acide tartrique, l'acide malique, l'acide maléique, l'acide glycolique, l'acide $\alpha$-cétoglutarique, l'acide salycilique, l'acide phtalique, l'acide citrique et les mélanges de ces acides.

Plus particulièrement, l'acide carboxylique est choisi dans le groupe constitué par l'acide malique, l'acide $\alpha$-cétoglutarique, l'acide citrique, l'acide stéarique et leurs mélanges. Plus préférentiellement encore, est utilisé l'acide citrique, l'acide stéarique ou un mélange de ces deux.

Une autre caractéristique essentielle de l'invention, pour la réduction visée des bruits de roulage, est que la quantité totale d'agent d'expansion et de son activateur associé soit supérieure à 10 pce, de préférence comprise entre 10 et 40 pce. Cette quantité totale est plus préférentiellement supérieure à 15 pce, en particulier comprise entre 15 et 40 pce.

4.4. Additifs divers

La composition de caoutchouc thermo-expansible peut comporter également tout ou partie des additifs usuels habituellement utilisés dans les compositions de caoutchouc pour bandes de roulement de pneus, comme par exemple des agents de protection tels que cires anti-ozone, anti-ozonants chimiques, anti-oxydants, des agents plastifiants, un système de réticulation à base soit de soufre, soit de donneurs de soufre et/ou de peroxyde et/ou de bismaléimides, des accélérateurs de vulcanisation, des activateurs de vulcanisation.

Selon un mode de réalisation préférentiel, la composition de caoutchouc thermo-expansible comporte également un agent plastifiant liquide (à 20°C) dont la fonction est de ramollir la matrice en diluant l'élastomère diénique et

la charge renforçante ; sa Tg (température de transition vitreuse) est par définition inférieure à -20°C, de préférence inférieure à -40°C.

Selon un autre mode de réalisation préférentiel, ce plastifiant liquide est utilisé à un taux relativement réduit, tel que le rapport pondéral charge renforçante sur agent plastifiant liquide soit supérieur à 2,0, plus préférentiellement supérieur à 2,5, en particulier supérieur à 3,0.

Toute huile d'extension, qu'elle soit de nature aromatique ou non-aromatique, tout agent plastifiant liquide connu pour ses propriétés plastifiantes vis-à-vis d'élastomères diéniques, est utilisable. A température ambiante (20°C), ces plastifiants ou ces huiles, plus ou moins visqueux, sont des liquides (c'est-à-dire, pour rappel, des substances ayant la capacité de prendre à terme la forme de leur contenant), par opposition notamment à des résines plastifiantes hydrocarbonées qui sont par nature solides à température ambiante.

Conviennent particulièrement les plastifiants liquides choisis dans le groupe constitué par les huiles naphténiques (à basse ou haute viscosité, notamment hydrogénées ou non), les huiles paraffiniques, les huiles MES (*Medium Extracted Solvates*), les huiles DAE (*Distillate Aromatic Extracts*), les huiles TDAE (*Treated Distillate Aromatic Extracts*), les huiles RAE (*Residual Aromatic Extracts*), les huiles TRAE (*Treated Residual Aromatic Extracts*), les huiles SRAE (*Safety Residual Aromatic Extracts*), les huiles minérales, les huiles végétales, les plastifiants éthers, les plastifiants esters, les plastifiants phosphates, les plastifiants sulfonates et les mélanges de ces composés. Selon un mode de réalisation plus préférentiel, l'agent plastifiant liquide est choisi dans le groupe constitué par les huiles MES, les huiles TDAE, les huiles naphténiques, les huiles végétales et les mélanges de ces huiles.

A titre de plastifiants phosphates par exemple, on peut citer ceux qui contiennent entre 12 et 30 atomes de carbone, par exemple le trioctyle phosphate. A titre d'exemples de plastifiants esters, on peut citer notamment les composés choisis dans le groupe constitué par les trimellitates, les pyromellitates, les phtalates, les 1,2-cyclohexane dicarboxylates, les adipates, les azélates, les sébacates, les triesters de glycérol et les mélanges de ces composés. Parmi les triesters ci-dessus, on peut citer notamment des triesters de glycérol, de préférence constitués majoritairement (pour plus de 50 %, plus préférentiellement pour plus de 80 % en poids) d'un acide gras insaturé en $C_{18}$, c'est-à-dire choisi dans le groupe constitué par l'acide oléique, l'acide linoléique, l'acide linolénique et les mélanges de ces acides. Plus préférentiellement, qu'il soit d'origine synthétique ou naturelle (cas par exemple d'huiles végétales de tournesol ou de colza), l'acide gras utilisé est constitué pour plus de 50% en poids, plus préférentiellement encore pour plus de 80% en poids d'acide oléique. De tels triesters (trioléates) à fort taux d'acide oléique sont bien connus, ils ont été décrits par exemple dans la demande WO 02/088238, à titre d'agents plastifiants dans des bandes de roulement pour pneus.

Selon un autre mode de réalisation préférentiel, la composition de caoutchouc de l'invention peut comporter aussi, à titre de plastifiant solide (à 23°C), une résine hydrocarbonée présentant une Tg supérieur à +20°C, de préférence supérieure à +30°C, telle que décrite par exemple dans les demandes WO 2005/087859, WO 2006/061064 ou WO 2007/017060.

Les résines hydrocarbonées sont des polymères bien connus de l'homme du métier, essentiellement à base de carbone et hydrogène, miscibles donc par nature dans les compositions d'élastomère(s) diénique(s) lorsqu'elles sont qualifiées en outre de "plastifiantes". Elles peuvent être aliphatiques, aromatiques ou encore du type aliphatique/aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole). Elles sont préférentiellement exclusivement hydrocarbonées, c'est-à-dire qu'elles ne comportent que des atomes de carbone et d'hydrogène.

De préférence, la résine plastifiante hydrocarbonée présente au moins une, plus préférentiellement l'ensemble, des caractéristiques suivantes :

- une Tg supérieure à 20°C (plus préférentiellement entre 40 et 100°C) ;
- une masse moléculaire moyenne en nombre (Mn) comprise entre 400 et 2000 g/mol (plus préférentiellement entre 500 et 1500 g/mol) ;
- un indice de polymolécularité (Ip) inférieur à 3, plus préférentiellement inférieur à 2 (rappel : Ip = Mw/Mn avec Mw masse moléculaire moyenne en poids).

La Tg de cette résine est mesurée de manière connue par DSC (*Differential Scanning Calorimetry*), selon la norme ASTM D3418. La macrostructure (Mw, Mn et Ip) de la résine hydrocarbonée est déterminée par chromatographie d'exclusion stérique (SEC) : solvant tétrahydrofurane ; température 35°C ; concentration 1 g/l; débit 1 ml/min ; solution filtrée sur filtre de porosité 0,45 μm avant injection ; étalonnage de Moore avec des étalons de polystyrène ; jeu de 3 colonnes "WATERS" en série ("STYRAGEL" HR4E, HR1 et HR0.5) ; détection par réfractomètre différentiel ("WATERS 2410") et son logiciel d'exploitation associé ("WATERS EMPOWER").

Selon un mode de réalisation particulièrement préférentiel, la résine plastifiante hydrocarbonée est choisie dans le groupe constitué par les résines d'homopolymère ou copolymère de cyclopentadiène (en abrégé CPD), les résines d'homopolymère ou copolymère de dicyclopentadiène (en abrégé DCPD), les résines d'homopolymère ou copolymère de terpène, les résines d'homopolymère ou copolymère de coupe C5, les résines d'homopolymère ou copolymère de coupe C9, les résines d'homopolymère ou copolymère d'alpha-méthyl-styrène et les mélanges de ces résines. Parmi les résines de copolymères ci-dessus sont plus préférentiellement utilisées celles choisies dans le groupe constitué par les résines de copolymère (D)CPD/ vinylaromatique, les résines de copolymère (D)CPD/ terpène, les résines de copolymère (D)CPD/ coupe C5, les résines de copolymère (D)CPD/ coupe C9, les résines de copolymère terpène/ vinylaromatique, les résines de copolymère terpène/ phénol, les résines de copolymère coupe C5/ vinylaromatique, les résines de copolymère coupe C9/ vinylaromatique, et les mélanges de ces résines.

Le terme "terpène" regroupe ici de manière connue les monomères alpha-pinène, beta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre. A titre de monomère vinylaromatique conviennent par exemple le styrène, l'alpha- méthylstyrène, l'ortho-, méta-, para-méthylstyrène, le vinyle-toluène, le para-tertiobutylstyrène, les méthoxystyrènes, les chlorostyrènes, les hydroxystyrènes, le vinylmésitylène, le divinylbenzène, le vinylnaphtalène, tout monomère vinylaromatique issu d'une coupe $C_9$ (ou plus généralement d'une coupe $C_8$ à $C_{10}$). De préférence, le composé vinyle-aromatique est du styrène ou un monomère vinylaromatique issu d'une coupe $C_9$ (ou plus généralement d'une coupe $C_8$ à $C_{10}$). De préférence, le composé vinylaromatique est le monomère minoritaire, exprimé en fraction molaire, dans le copolymère considéré.

Le taux de résine hydrocarbonée est préférentiellement compris entre 3 et 60 pce, plus préférentiellement entre 3 et 40 pce, notamment entre 5 et 30 pce.

Dans le cas où l'on souhaite augmenter la rigidité de la bande de roulement une fois expansée, sans réduire pour autant la teneur en plastifiant liquide ci-dessus, on pourra avantageusement incorporer des résines renforçantes (e.g. accepteurs et donneurs de méthylène) tels que décrites par exemple dans WO 02/10269 ou US 7,199,175.

La composition de caoutchouc thermo-expansible peut également contenir des activateurs de couplage lorsqu'un agent de couplage est utilisé, des agents de recouvrement de la charge inorganique lorsqu'une charge inorganique est utilisée, ou plus généralement des agents d'aide à la mise en œuvre (processabilité) susceptibles de manière connue, grâce à une amélioration de la dispersion de la charge dans la matrice de caoutchouc et à un abaissement de la viscosité des compositions, d'améliorer leur processabilité à l'état cru ; ces agents sont par exemple des hydroxysilanes ou des silanes hydrolysables tels que des alkyl-alkoxysilanes, des polyols, des polyéthers, des aminés, des polyorganosiloxanes hydroxylés ou hydrolysables.

4.5. Fabrication des compositions

Les compositions de caoutchouc sont fabriquées dans des mélangeurs appropriés, en utilisant par exemple deux phases de préparation successives selon une procédure générale connue de l'homme du métier : une première phase de travail ou malaxage thermomécanique (parfois qualifiée de phase "non-productive") à haute température, jusqu'à une température maximale comprise entre 130°C et 200°C, de préférence entre 145°C et 185°C, au cours de laquelle est incorporé notamment l'activateur d'expansion (acide carboxylique), suivie d'une seconde phase de travail mécanique (parfois qualifiée de phase "productive") à basse température, typiquement inférieure à 120°C, par exemple entre 60°C et 100°C, phase de finition au cours de laquelle sont incorporés l'agent d'expansion et le système de réticulation ou vulcanisation.

Un procédé utilisable pour la fabrication de telles compositions de caoutchouc comporte par exemple et de préférence les étapes suivantes :

- incorporer dans un mélangeur, à l'élastomère ou au mélange d'élastomères, au moins la charge et l'acide carboxylique en malaxant thermomécaniquement le tout, en une ou plusieurs fois, jusqu'à atteindre une température maximale comprise entre 130°C et 200°C ;
- refroidir l'ensemble à une température inférieure à 100°C ;
- puis incorporer l'agent d'expansion (carbonate ou hydrogénocarbonate de Na ou K) au mélange ainsi obtenu et refroidi, en malaxant thermomécaniquement le tout jusqu'à atteindre une température maximale inférieure à 100 C ;
- incorporer ensuite un système de réticulation ;
- malaxer le tout jusqu'à une température maximale inférieure à 120°C ;
- extruder ou calandrer la composition de caoutchouc ainsi obtenue.

A titre d'exemple, on introduit au cours de la première phase non-productive, dans un mélangeur approprié tel qu'un mélangeur interne usuel, tous les constituants nécessaires, les éventuels agents de recouvrement ou de mise en œuvre complémentaires et autres additifs divers, à l'exception de l'agent d'expansion et du système de réticulation. Après travail thermomécanique, tombée et refroidissement du mélange ainsi obtenu, on incorpore alors, de préférence dans cet ordre, l'agent d'expansion, puis le retardateur de vulcanisation (si un tel composé est utilisé), enfin le reste du système de vulcanisation (soufre et accélérateur) à basse température, généralement dans un mélangeur externe tel

qu'un mélangeur à cylindres ; le tout est alors mélangé (phase productive) pendant quelques minutes, par exemple entre 5 et 15 min.

Le système de réticulation proprement dit est préférentiellement à base de soufre et d'un accélérateur primaire de vulcanisation, en particulier d'un accélérateur du type sulfénamide. A ce système de vulcanisation viennent s'ajouter, incorporés au cours de la première phase non-productive et/ou au cours de la phase productive, divers accélérateurs secondaires ou activateurs de vulcanisation connus tels qu'oxyde de zinc, acide stéarique, dérivés guanidiques (en particulier diphénylguanidine), etc. Le taux de soufre est de préférence compris entre 0,5 et 5 pce, celui de l'accélérateur primaire est de préférence compris entre 0,5 et 8 pce.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de types thiurames, dithiocarbamates de zinc. Ces accélérateurs sont par exemple choisis dans le groupe constitué par disulfure de 2-mercaptobenzothiazyle (en abrégé "MBTS"), disulfure de tétrabenzylthiurame ("TBZTD"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), dibenzyldithiocarbamate de zinc ("ZBEC") et les mélanges de ces composés.

L'acide carboxylique ayant comme effet possible celui de réduire le délai d'induction (c'est-à-dire le temps nécessaire au début de la réaction de vulcanisation) lors de la cuisson de la composition, on pourra utiliser avantageusement un retardateur de vulcanisation permettant de contrecarrer ce phénomène, et d'offrir ainsi à la composition de caoutchouc le temps nécessaire pour une expansion complète avant sa vulcanisation.

Le taux de ce retardateur de vulcanisation est de préférence compris entre 0,5 et 10 pce, plus préférentiellement entre 1 et 5 pce, en particulier entre 1 et 3 pce.

Les retardateurs de vulcanisation sont bien connus de l'homme du métier. On peut citer par exemple le N-cyclohexylthiophtalimide commercialisé sous la dénomination « Vulkalent G » par la société Lanxess, le N-(trichlorométhylthio)benzène-sulfonamide commercialisé sous dénomination « Vulkalent E/C » par Lanxess, ou encore l'anhydride phtalique commercialisé sous dénomination « Vulkalent B/C » par Lanxess. De manière préférentielle, on utilise le N-cyclohexylthiophtalimide (en abrégé « CTP »).

La composition finale ainsi obtenue est ensuite calandrée par exemple sous la forme d'une feuille ou d'une plaque, notamment pour une caractérisation au laboratoire, ou encore calandrée ou extrudée sous la forme d'une bande de roulement thermo-expansible.

A l'état cru (i.e., non vulcanisé) et donc non expansé, la densité ou masse volumique notée $D_1$ de la composition de caoutchouc thermo-expansible est de préférence comprise entre 1,100 et 1,400 g/cm$^3$, plus préférentiellement comprise dans un domaine de 1,150 à 1,350 g/cm$^3$.

La vulcanisation (ou cuisson) est conduite de manière connue à une température généralement comprise entre 130°C et 200°C, pendant un temps suffisant qui peut varier par exemple entre 5 et 90 min en fonction notamment de la température de cuisson, du système de vulcanisation adopté et de la cinétique de vulcanisation de la composition considérée.

C'est au cours de cette étape de vulcanisation que l'agent d'expansion va libérer une quantité de gaz importante, conduire à la formation de bulles dans la composition de caoutchouc mousse et finalement à son expansion.

A l'état cuit (i.e., vulcanisé), la densité notée $D_2$ de la composition de caoutchouc une fois expansée (i.e., à l'état de caoutchouc mousse) est comprise de préférence entre 0,500 et 1,000 g/cm$^3$, plus préférentiellement comprise dans un domaine de 0,600 à 0,850 g/cm$^3$.

Son taux d'expansion volumique noté $T_E$ (exprimé en %) est de préférence compris entre 30% et 150%, plus préférentiellement dans un domaine de 50 à 120%, ce taux d'expansion $T_E$ étant calculé de manière connue à partir des densités $D_1$ et $D_2$ ci-dessus, comme suit :

$$T_E = [(D_1/D_2) - 1] \times 100.$$

Préférentiellement, sa dureté Shore A (mesurée conformément à la norme ASTM D 2240-86) est comprise dans un domaine de 45 à 60.

## 5. EXEMPLES DE REALISATION DE L'INVENTION

La composition de caoutchouc thermo-expansible précédemment décrite est avantageusement utilisable dans les bandes de roulement, au moins pour leur portion qui est destinée à entrer directement en contact avec la surface de la route, de pneus pour tout type de véhicule, en particulier dans les pneus pour véhicules tourisme, comme démontré dans les essais qui suivent.

Pour les besoins de ces essais, deux compositions de caoutchouc (notées C-0 et C-1) ont été préparées dont

la formulation est donnée dans le tableau 1 (taux des différents produits exprimé en pce). La composition C-0 est la composition témoin. La composition C-1 est celle conforme à l'invention, elle comporte en plus l'agent d'expansion (hydrogénocarbonate de sodium) et l'acide carboxylique (acide citrique) associé, ainsi qu'un retardateur de vulcanisation (CTP).

Pour la fabrication de ces compositions, on a procédé de la manière suivante: on a introduit dans un mélangeur interne, dont la température initiale de cuve était d'environ 60°C, successivement la charge renforçante, l'élastomère diénique (coupage SBR et BR), l'acide carboxylique pour la composition C-1, ainsi que les divers autres ingrédients à l'exception du système de vulcanisation et de l'agent d'expansion ; le mélangeur était ainsi rempli à environ 70% (% en volume). On a conduit alors un travail thermomécanique (phase non-productive) en une étape d'environ 2 à 4 min, jusqu'à atteindre une température maximale de "tombée" d'environ 150°C. On a récupéré le mélange ainsi obtenu, on l'a refroidi à 50°C environ puis on a incorporé l'agent d'expansion (hydrogénocarbonate de Na), le retardateur de vulcanisation (CTP), ensuite l'accélérateur sulfénamide et le soufre sur un mélangeur externe (homo-finisseur) à 30°C, en mélangeant le tout (phase productive) pendant quelques minutes.

Les compositions C-0 et C-1 ainsi préparées ont été ensuite vulcanisées sous presse, et leurs propriétés mesurées avant et après cuisson (voir tableau 2 annexé).

La composition de caoutchouc selon l'invention présente après cuisson, une fois à l'état de caoutchouc mousse (i.e., expansée), une densité nettement réduite correspondant à un taux d'expansion volumique particulièrement élevé, d'environ 70%. Une telle capacité d'expansion lui confère des propriétés de barrière au son améliorées, susceptibles de contribuer à réduire les bruits émis tant à l'intérieur qu'à l'extérieur des véhicules lors du roulage de leurs pneus.

Suite à ces premiers essais, d'autres compositions de caoutchouc notées C-2 et C-3 ont été préparées, destinées à être utilisées comme bandes de roulement de pneus tourisme à carcasse radiale, notés respectivement P-2 (pneus témoins) et P-3 (pneus conformes à l'invention), ces pneus étant conventionnellement fabriqués et en tous points identiques hormis les compositions de caoutchouc constitutives de leur bande de roulement. La formulation (taux en pce) de ces deux compositions est donnée au tableau 3, leurs propriétés ont été mesurées avant et après cuisson (tableau 4) : la composition de caoutchouc de la bande de roulement du pneu selon l'invention présente après cuisson, une fois à l'état de caoutchouc mousse (i.e., expansée), une densité très nettement réduite correspondant à un taux d'expansion volumique particulièrement élevé, d'environ 74%.

Pour caractériser ensuite les propriétés de réduction du bruit des bandes de roulement, on a conduit un test de roulage des pneus dans lequel on a évalué le niveau sonore émis par les pneus en mesurant le niveau de pression acoustique, lors d'un roulage du véhicule à une vitesse de 60 km/h, grâce à plusieurs microphones disposés à l'intérieur du véhicule ("*road noise*"). Le véhicule utilisé était un véhicule de marque « Subaru » (modèle « R1 ») ; le revêtement de la chaussée utilisée pour ce test correspond à un asphalte semi rugueux ; lors du passage dans l'aire de mesure, l'enregistrement de la pression acoustique est déclenché.

Les résultats du tableau 5 expriment les différences de niveau sonore enregistré entre les pneus P-3 selon l'invention et les pneus témoins notés P-2, dans un domaine de fréquences de 300 à 1 900 Hz. Ces différences sont exprimées en énergie acoustique (dB(A)) qui correspond à l'intégration de la pression acoustique en fonction de la fréquence sur les domaines de fréquences considérés, une valeur négative indiquant une réduction du bruit par rapport à la référence (pneus P-2).

A la lecture du tableau 5, on constate qu'une réduction de bruit significative pour l'homme du métier est obtenue sur les pneus conformes à l'invention, grâce à la composition de caoutchouc mousse spécifique constituant leur bande de roulement.

**Tableau 1**

| Composition N°: | C-0 | C-1 |
|---|---|---|
| SBR(1) | 70 | 70 |
| BR (2) | 30 | 30 |
| silice (3) | 80 | 80 |
| agent de couplage (4) | 6.4 | 6.4 |
| noir de carbone (5) | 5 | 5 |
| agent d'expansion (6) | - | 16 |
| activateur d'expansion (7) | - | 8.5 |
| plastifiant liquide (8) | 15 | 15 |
| résine plastifiante (9) | 20 | 20 |
| DPG(10) | 1.5 | 1.5 |
| ZnO | 1.2 | 1.2 |
| acide stéarique | 2 | 2 |

(suite)

| Composition N°: | C-0 | C-1 |
|---|---|---|
| cire anti-ozone | 1.5 | 1.5 |
| antioxydant (11) | 2 | 2 |
| soufre | 1.2 | 1.2 |
| accélérateur (12) | 1.8 | 1.8 |
| retardateur (13) | - | 1.0 |

(1) SBR avec 26% de motif styrène et 74% de motifs butadiène (21% de -1,4 trans, 21% de -1,4 cis et 58% de -1,2) ; Tg = -25°C ;
(2) BR avec 0,3% de 1-2 ; 2,7% de trans ; 97% de cis 1-4 (Tg = -104°C) ;
(3) silice « Ultrasil 7000 » de la société Degussa, type "HDS" (BET et CTAB : environ 160 $m^2/g$);
(4) agent de couplage TESPT (« Si69 » de la société Degussa) ;
(5) grade ASTM N234 (société Cabot) ;
(6) hydrogénocarbonate de sodium (« Cellmic C266 » de la société Sankyo Kasei) ;
(7) acide citrique (société Kanto Kagaku) ;
(8) huile MES (« Catenex SNR » de la société Shell)
(9) résine C5/C9 (« Escorez ECR-373 » de la société Exxon) ;
(10) diphénylguanidine (« Perkacit DPG » de la société Flexsys) ;
(11) N-1,3-diméthylbutyl-N-phénylparaphénylènediamine (« Santoflex 6-PPD » de la société Flexsys);
(12) N-dicyclohexyl-2-benzothiazol-sulfénamide (« Santocure CBS » de la société Flexsys) ;
(13) cyclohexyl thiophtalimide (« Vulkalent G » de la société Lanxess).

**Tableau 2**

| Composition testée : | C-0 | C-1 |
|---|---|---|
| Dureté Shore A | 65 | 50 |
| Densité avant cuisson du pneu | 1.17 | 1.18 |
| Densité après cuisson du pneu | 1.17 | 0.69 |
| Taux d'expansion volumique (%) | 0 | 70 |

**Tableau 3**

| Composition N°: | C-2 | C-3 |
|---|---|---|
| SBR (1) | 70 | 70 |
| BR (2) | 30 | 30 |
| silice (3) | 80 | 80 |
| agent de couplage (4) | 6.4 | 6.4 |
| noir de carbone (5) | 5 | 5 |
| agent d'expansion (6) | - | 17 |
| activateur d'expansion (7) | - | 7 |
| plastifiant liquide (8) | 10 | 10 |
| résine plastifiante (9) | 20 | 20 |
| DPG (10) | 1.5 | 1.5 |
| ZnO | 1.2 | 1.2 |
| acide stéarique | 2 | 2 |
| cire anti-ozone | 1.5 | 1.5 |
| antioxydant (11) | 2 | 2 |
| soufre | 1.2 | 1.2 |
| accélérateur (12) | 2.5 | 2.5 |

(suite)

| Composition N°: | C-2 | C-3 |
|---|---|---|
| retardateur (13) | - | 2.5 |
| (1) à (13) : idem tableau 1 | | |

**Tableau 4**

| Composition testée : | C-2 | C-3 |
|---|---|---|
| Dureté Shore A (mesurée sur pneu) : | 65 | 50 |
| Densité avant cuisson du pneu | 1.17 | 1.20 |
| Densité après cuisson du pneu | 1.17 | 0.69 |
| Taux d'expansion volumique (%) | 0 | 74 |

**Tableau 5**

| Domaine (Hz) | 300-700 | 700-1100 | 1100-1500 | 1500-1900 |
|---|---|---|---|---|
| dB(A) (*) | -0.5 | -0.6 | -0.9 | -1.1 |
| (*) différence entre pneu de l'invention et pneu témoin, à l'intérieur du véhicule | | | | |

**Revendications**

1. Pneu dont la bande de roulement comporte, à l'état non vulcanisé, une composition de caoutchouc thermo-expansible comportant au moins :

   - 50 à 100 pce d'un copolymère à base de styrène et de butadiène ;
   - optionnellement, 0 à 50 pce d'un autre élastomère diénique ;
   - plus de 50 pce d'une charge renforçante ;
   - entre 5 et 25 pce d'un carbonate ou hydrogénocarbonate de sodium ou potassium ;
   - entre 2 et 15 pce d'un acide carboxylique dont la température de fusion est comprise entre 60°C et 220°C ;
   - la teneur totale en (hydrogéno)carbonate et acide carboxylique étant supérieure à 10 pce.

2. Pneu selon la revendication 1, dans lequel le copolymère à base de styrène et de butadiène est choisi dans le groupe constitué par les copolymères styrène-butadiène, les copolymères styrène-butadiène-isoprène et les mélanges de tels copolymères, de préférence est un copolymère styrène-butadiène.

3. Pneu selon l'une quelconque des revendications 1 à 2, dans lequel le copolymère à base de styrène et de butadiène présente une température de transition vitreuse qui est supérieure à -40°C, de préférence comprise dans un domaine de -30°C à +30°C.

4. Pneu selon l'une quelconque des revendications 1 à 3, dans lequel l'autre élastomère diénique est choisi dans le groupe constitué par le caoutchouc naturel, les polyisoprènes de synthèse, les polybutadiènes, les copolymères de butadiène, les copolymères d'isoprène et les mélanges de ces élastomères.

5. Pneu selon l'une quelconque des revendications 1 à 4, dans lequel le taux de charge renforçante est compris entre 50 et 150 pce, de préférence compris dans un domaine de 70 à 120 pce.

6. Pneu selon l'une quelconque des revendications 1 à 5, dans lequel la composition de caoutchouc comporte en outre un agent plastifiant liquide à 20°C, à un taux tel que le rapport pondéral charge renforçante sur agent plastifiant liquide est supérieur à 2,0, de préférence supérieur à 2,5.

7. Pneu selon l'une quelconque des revendications 1 à 6, dans lequel le taux de carbonate ou hydrogénocarbonate

est compris entre 8 et 20 pce.

8. Pneu selon l'une quelconque des revendications 1 à 7, dans lequel le taux d'acide carboxylique est compris entre 2 et 15 pce.

9. Pneu selon l'une quelconque des revendications 1 à 8, dans lequel la teneur totale en (hydrogéno)carbonate et acide carboxylique est supérieure à 15 pce, de préférence comprise entre 15 et 40 pce.

10. Pneu selon l'une quelconque des revendications 1 à 9, dans lequel la température de fusion de l'acide carboxylique est comprise entre 100°C et 200°C, de préférence entre 120 et 180°C.

11. Pneu selon l'une quelconque des revendications 1 à 10, dans lequel le pKa de l'acide carboxylique est supérieur à 1, de préférence compris entre 2,5 et 12.

12. Pneu selon l'une quelconque des revendications 1 à 11, dans lequel l'acide carboxylique comporte, le long de sa chaîne hydrocarbonée, de 2 à 22 atomes de carbone, de préférence est choisi dans le groupe constitué par l'acide palmitique, l'acide stéarique, l'acide nonadécanoique, l'acide béhénique, l'acide oxalique, l'acide malonique, l'acide succinique, l'acide glutarique, l'acide adipique, l'acide pimellique, l'acide subérique, l'acide azélaique, l'acide sébacique, l'acide benzoïque, l'acide tartrique, l'acide malique, l'acide maléique, l'acide glycolique, l'acide $\alpha$-cétoglutarique, l'acide salycilique, l'acide phtalique, l'acide citrique et les mélanges de ces acides.

13. Pneu selon la revendication 12, dans lequel l'acide carboxylique est choisi dans le groupe constitué par l'acide malique, l'acide $\alpha$-cétoglutarique, l'acide citrique, l'acide stéarique et les mélanges de ces acides.

14. Pneu selon l'une quelconque des revendications 1 à 13, dans lequel la composition de caoutchouc comporte en outre un retardateur de vulcanisation, de préférence à un taux compris entre 0,5 et 10 pce.

15. Pneu à l'état vulcanisé, obtenu après cuisson d'un pneumatique selon l'une quelconque des revendications 1 à 14.

**Patentansprüche**

1. Reifen, dessen Laufband im nicht vulkanisierten Zustand eine thermisch dehnbare GummiZusammensetzung umfasst, umfassend wenigstens:

   - 50 bis 100 phr eines Kopolymers auf Styrol- und Butadien-Basis;
   - optional 0 bis 50 phr eines anderen Dien-Elastomers;
   - mehr als 50 phr einer Verstärkungscharge;
   - zwischen 5 und 25 phr eines Natrium- oder Kalium-Karbonats oder -Hydrogenkarbonats;
   - zwischen 2 und 15 phr einer Carbolsäure, deren Schmelztemperatur zwischen 60° C und 220° C inbegriffen ist;
   - wobei der Gesamtgehalt an (Hydrogen-)Karbonat und Carbolsäure höher als 10 phr ist.

2. Reifen gemäß Anspruch 1, bei dem das Kopolymer auf Styrol- und Butadienbasis aus der Gruppe ausgewählt ist, die aus Styrol-Butadien-Kopolymeren, Isopren-Butadienstyrol-Kopolymeren und den Mischungen derartiger Kopolymere gebildet ist, bevorzugt ein Butadienstyrol-Kopolymer ist.

3. Reifen gemäß irgendeinem der Ansprüche 1 bis 2, bei dem das Kopolymer auf Styrol- und Butadienbasis eine Glasübergangstemperatur aufweist, die höher als - 40° C ist, bevorzugt in einem Bereich von -30° C bis +30° C inbegriffen ist.

4. Reifen gemäß irgendeinem der Ansprüche 1 bis 3, bei dem das das andere Dien-Elastomer aus der Gruppe ausgewählt ist, die durch natürliches Gummi, Synthese-Polyisoprene, Polybutadiene, Butadien-Kopolymere, Isopren-Kopolymere und den Mischungen dieser Elastomere gebildet ist.

5. Reifen gemäß irgendeinem der Ansprüche 1 bis 4, bei dem der Verstärkungschargensatz zwischen 50 und 150 phr inbegriffen, bevorzugt in einem Bereich von 70 bis 120 phr inbegriffen ist.

6. Reifen gemäß irgendeinem der Ansprüche 1 bis 5, bei dem die Gummizusammensetzung darüber hinaus einen

bei 20° C flüssigen Weichmacher zu einem Satz derart umfasst, dass das Gewichtsverhältnis der Verstärkungscharge zu dem flüssigen Weichmacher höher ist als 2,0, bevorzugt höher als 2,5.

**7.** Reifen gemäß irgendeinem der Ansprüche 1 bis 6, bei dem der Karbonat- oder Hydrogenkarbonatsatz zwischen 8 und 20 phr inbegriffen ist.

**8.** Reifen gemäß irgendeinem der Ansprüche 1 bis 7, bei dem der Carbolsäuresatz zwischen 2 und 15 phr inbegriffen ist.

**9.** Reifen gemäß irgendeinem der Ansprüche 1 bis 8, bei dem der Gesamtgehalt an (Hydrogen-)Karbonat und Carbolsäure höher ist als 15 phr, bevorzugt zwischen 15 und 40 phr inbegriffen ist.

**10.** Reifen gemäß irgendeinem der Ansprüche 1 bis 9, bei dem die Schmelztemperatur der Carbolsäure zwischen 100° C und 200° C, bevorzugt zwischen 120 und 180° C inbegriffen ist.

**11.** Reifen gemäß irgendeinem der Ansprüche 1 bis 10, bei dem das pKa der Carbolsäure größer ist als 1, bevorzugt zwischen 2,5 und 12 inbegriffen ist.

**12.** Reifen gemäß irgendeinem der Ansprüche 1 bis 11, bei dem die Carbolsäure, die entlang ihrer kohlenwasserstoffhaltigen Kette 2 bis 22 Kohlenstoffatome umfasst, bevorzugt aus der Gruppe ausgewählt ist, die durch Palmitinsäure, Stearinsäure, Nonadecansäure, Behensäure, Oxalsäure, Malonsäure, Bernsteinsäure, Glutarsäure, Adipinsäure, Pimellinsäure, Korksäure, Azelainsäure, Sebacinsäure, Benzoesäure, Weinsäure, Apfelsäure, Maleinsäure, Glykolsäure, α-Ketoglutarsäure, Salicylsäure, Phthalsäure, Zitronensäure und die Mischungen dieser Säuren gebildet ist.

**13.** Reifen gemäß Anspruch 12, bei dem die Carbolsäure aus der Gruppe ausgewählt ist, bestehend aus Apfelsäure, α-Ketoglutarsäure, Zitronensäure, Stearinsäure und den Mischungen dieser Säuren.

**14.** Reifen gemäß irgendeinem der Ansprüche 1 bis 13, bei dem die Gummizusammensetzung darüber hinaus einen Vulkanisationsverzögerer, bevorzugt zu einem zwischen 0,5 und 10 phr inbegriffenen Satz, umfasst.

**15.** Reifen im vulkanisierten Zustand, der nach dem Backen eines Reifens gemäß irgendeinem der Ansprüche 1 bis 14 erhalten wird.

## Claims

**1.** Tyre, the tread of which comprises, in the non-vulcanised state, a heat-expandable rubber composition comprising at least:

- 50 to 100 phr of a copolymer with a styrene and butadiene base;
- optionally, 0 to 50 phr of another diene elastomer;
- more than 50 phr of a reinforcing filler;
- between 5 and 25 phr of a sodium or potassium carbonate or hydrogen carbonate;
- between 2 and 15 phr of a carboxylic acid of which the melting temperature is comprised between 60°C and 220°C;
- with the total content in hydrogen carbonate and carboxylic acid being greater than 10 phr.

**2.** Tyre according to claim 1, wherein the copolymer with a styrene and butadiene base is chosen from the group comprising styrene-butadiene copolymers, styrene-butadiene-isoprene copolymers and mixtures of such copolymers, preferably is a styrene-butadiene copolymer.

**3.** Tyre according to any of claims 1 to 2, wherein the copolymer with a styrene and butadiene base has a glass transition temperature that is greater than -40°C, preferably in a range from -30°C to +30°C.

**4.** Tyre according to any of claims 1 to 3, wherein the other diene elastomer is chosen from the group comprising natural rubber, synthetic polyisoprenes, polybutadienes, butadiene copolymers, isoprene copolymers and the mixtures of these elastomers.

5. Tyre according to any of claims 1 to 4, wherein the rate of reinforcing filler is comprised between 50 and 150 phr, preferable in a range from 70 to 120 phr.

6. Tyre according to any of claims 1 to 5, wherein the rubber composition further comprises a plasticizer that is liquid at 20°C, at a rate such that the weight ratio of the reinforcing filler over the liquid plasticizer is greater than 2.0, preferably greater than 2.5.

7. Tyre according to any of claims 1 to 6, wherein the rate of carbonate or hydrogen carbonate is comprised between 8 and 20 phr.

8. Tyre according to any of claims 1 to 7, wherein the rate of carboxylic acid is comprised between 2 and 15 phr.

9. Tyre according to any of claims 1 to 8, wherein the total content in hydrogen carbonate and carboxylic acid is greater than 15 phr, preferably comprised between 15 and 40 phr.

10. Tyre according to any of claims 1 to 9, wherein the melting temperature of the carboxylic acid is comprised between 100°C and 200°C, preferably between 120 and 180°C.

11. Tyre according to any of claims 1 to 10, wherein the pKa of the carboxylic acid is greater than 1, preferably comprised between 2.5 and 12.

12. Tyre according to any of claims 1 to 11, wherein the carboxylic acid comprises, along its hydrocarbon chain, from 2 to 22 carbon atoms, preferable is chosen from the group comprising palmitic acid, stearic acid, nonadecanoic acid, behenic acid, oxalic acid, malonic acid, succinic acid, glutaric acid, adipic acid, pimellic acid, suberic acid, azelaic acid, sebacic acid, benzoic acid, tartaric acid, malic acid, maleic acid, glycolic acid, $\alpha$-cetoglutaric acid, salycilic acid, phthalic acid, citric acid and the mixtures of these acids.

13. Tyre according to claim 12, wherein the carboxylic acid is chosen from the group comprising malic acid, $\alpha$-cetoglutaric acid, citric acid, stearic and the mixtures of these acids.

14. Tyre according to any of claims 1 to 13, wherein rubber composition further comprises a vulcanisation retarder, preferably at a rate comprised between 0.5 and 10 phr.

15. Tyre in the vulcanised state, obtained after curing a tyre according to any of claims 1 to 14.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2010069510 A
- EP 2039531 A
- FR 1475141 A
- US 20030119927 A
- WO 9736724 A
- WO 9916600 A
- WO 2006069792 A
- WO 2006069793 A
- WO 2008003434 A
- WO 2008003435 A
- WO 03002648 A
- US 2005016651 A
- WO 03002649 A
- US 2005016650 A
- WO 02083782 A
- US 7217751 B
- WO 0230939 A
- US 6774255 B
- WO 0231041 A
- US 2004051210 A
- WO 2007061550 A
- WO 2006125532 A
- WO 2006125533 A
- WO 2006125534 A
- US 6849754 B
- WO 9909036 A
- WO 2006023815 A
- WO 2007098080 A
- WO 02088238 A
- WO 2005087859 A
- WO 2006061064 A
- WO 2007017060 A
- WO 0210269 A
- US 7199175 B